# EUROPEAN PATENT APPLICATION

(11) **EP 4 459 333 A1**
(43) Date of publication of application: **06.11.2024**
(21) Application number: 22914663.4
(22) Date of filing: 26.12.2022
(51) Int. Cl.: G01V 5/00, G01N 23/04

(54) **SECURITY INSPECTION EQUIPMENT, SECURITY INSPECTION SYSTEM AND SECURITY INSPECTION METHOD**

(30) Priority: 31.12.2021 CN 202111670243
(71) Applicant: Nuctech (Beijing) Company Limited, Beijing 101500 (CN); NUCTECH COMPANY LIMITED, Beijing 100084 (CN)
(72) Inventor: LI, Yuanjing, Beijing 100084 (CN); SUN, Shangmin, Beijing 100084 (CN); ZONG, Chunguang, Beijing 100084 (CN); SONG, Tao, Beijing 100084 (CN); LIU, Lei, Beijing 100084 (CN); MA, Yuan, Beijing 100084 (CN); YU, Weifeng, Beijing 100084 (CN); LIU, Bicheng, Beijing 100084 (CN)
(74) Representative: Gunzelmann, Rainer
(86) International application number: PCT/CN2022/141913
(87) International publication number: WO 2023/125409

(57) **Abstract**

A security inspection device is provided, including: a support frame (6) defining an inspection channel extending in a first direction; a first X-ray accelerator (1) provided at a position of a top portion of the support frame (6) and the position is offset from a centerline of the inspection channel, where the first X-ray accelerator is configured to radiate a first X-ray (11) downwards towards the inspection channel to inspect an object to be inspected (7) passing through the inspection channel; a second X-ray accelerator (2) configured to radiate a second X-ray (21) to the inspection channel to inspect the object to be inspected (7) passing through the inspection channel; and a detector apparatus, including: a plurality of detector modules provided on the support frame (6) and facing the first X-ray accelerator (1) and the second X-ray accelerator (2), where the plurality of detector modules are configured to receive at least a part of the first X-ray (11) and/or the second X-ray (21) to form a transmission image of the object to be inspected (7); where the first X-ray (11), the second X-ray (21), and the plurality of detector modules in the detector apparatus are constructed to be located in the same plane. A security inspection system and a security inspection method applied to the security inspection device are further included.

## Description

### TECHNICAL FIELD

At least one of embodiments of the present disclosure relates to the field of security inspection technology, in particular to a security inspection device, a security inspection system, and a security inspection method.

### BACKGROUND

At present, the demand for security inspections on large objects is increasing. For example, in work scenarios such as customs, it is desired to scan bulky objects to be inspected such as containers and/or vehicles.

At present, the device for security inspections on the above-mentioned objects to be inspected includes at least two support frames, which are adjacent to each other and located on upstream and downstream in the direction of movement of the objects to be inspected. Moreover, two sets of scanning devices (such as X-ray accelerators and corresponding detector modules) need to be provided on the two support frames respectively to scan the objects to be inspected from at least two angles.

The above security inspection device includes two support frames, so it needs to occupy (or reserve) a larger space. In addition, as each support frame requires to be provided with corresponding X-ray accelerators and detector modules, a larger number of detector modules are required. Furthermore, due to the large number of detector modules, the response signals collected by the detector modules and the control of security inspection device are also more complex.

### SUMMARY

For technical problems in the prior art, the present disclosure provides a security inspection device, a security inspection system, and a security inspection method for at least partially solving the above technical problems.

An aspect of the present disclosure provides a security inspection device, including: a support frame, defining an inspection channel extending in a first direction; a first X-ray accelerator provided at a position of a top portion of the support frame and the support frame is offset from a centerline of the inspection channel, wherein the first X-ray accelerator is configured to radiate a first X-ray downwards towards the inspection channel to inspect an object to be inspected passing through the inspection channel; a second X-ray accelerator configured to radiate a second X-ray to the inspection channel to inspect the object to be inspected passing through the inspection channel; and a detector apparatus, including: a plurality of detector modules provided on the support frame and facing the first X-ray accelerator and the second X-ray accelerator, wherein the plurality of detector modules are configured to receive at least a part of the first X-ray and/or the second X-ray to form a transmission image of the object to be inspected; wherein the first X-ray, the second X-ray, and a central plane formed by the plurality of detector modules are constructed to be located in the same plane.

According to an embodiment of the present disclosure, the detector apparatus further includes a signal acquisition module, the signal acquisition module is electrically connected to the first X-ray accelerator, the second X-ray accelerator, and the plurality of detector modules, and the signal acquisition module is configured to mark signals generated by the first X-ray and the second X-ray and received by the detector module.

According to an embodiment of the present disclosure, the plurality of detector modules are tiled and constructed into a row, a column, or an array; wherein tiling the plurality of detector modules represents that receiving ends of detector modules in each row, column, or array are located in the same plane.

According to an embodiment of the present disclosure, a part of the plurality of detector modules are respectively constructed as a side array and a bottom array; wherein the side array is provided on an inner side surface of the support frame, the bottom array is provided on an inner bottom surface of the support frame, and a beam divergence angle of the first X-ray covers the side array and the bottom array.

According to an embodiment of the present disclosure, the other part of the plurality of detector modules are constructed as a top array; wherein the top array is provided on an inner top surface of the support frame, and a beam divergence angle of the second X-ray covers the side array and the top array.

According to an embodiment of the present disclosure, the beam divergence angle of the second X-ray further covers a part of the bottom array.

The present disclosure further provides a security inspection method, including: sequentially radiating the first X-ray and the second X-ray to the inspection channel at an interval, respectively, by the first X-ray accelerator and the second X-ray accelerator; and collecting the first X-ray and the second X-ray and generating data packets respectively, by the detector module.

According to an embodiment of the present disclosure, the collecting the first X-ray and the second X-ray and generating data packets respectively, by the detector module includes: outputting a synchronization pulse signal and/or an image marking signal to the detector module, by the first X-ray accelerator and the second X-ray accelerator, while radiating the first X-ray and the second X-ray to the inspection channel; collecting the first X-ray and the second X-ray based on the synchronization pulse signal and marking the collected data packets as a first data packet and a second data packet based on the image marking signal, by the detector module.

According to an embodiment of the present disclosure, the method further includes: stitching data in each data packet based on the first data packet and the second data packet, so as to generate a first transmission image and a second transmission image, respectively.

The present disclosure further provides a security inspection system, applied to detect a moving vehicle, including: the security inspection device; and a speed detection device configured to detect a speed of the vehicle, wherein the speed detection device includes: a first detection apparatus on an upstream of the security inspection device; and a second detection apparatus on the upstream of the security inspection device and is spaced apart from the first detection apparatus; wherein the first detection apparatus and the second detection apparatus are configured to: obtain a contour of the vehicle when the vehicle passes through the second detection apparatus, detect when a carriage of the vehicle leaves the second detection apparatus, measure the speed of the vehicle by dividing a distance between the second detection apparatus and the first detection apparatus by a time interval between the vehicle passing through the second detection apparatus and the first detection apparatus, determine a size of a cab of the vehicle using the measured speed of the vehicle, determine a position of the cab of the moving vehicle in the inspection channel, and determine a time for the first X-ray accelerator to emit beam and a time for the second X-ray accelerator to emit beam, so that the first X-ray accelerator and the second X-ray accelerator emit beams separately after the cab passing through the security inspection device.

The exemplary embodiment of the present disclosure discloses a security inspection device. The first X-ray accelerator, the second X-ray accelerator, and the detector apparatus are all provided in one support frame, with high compactness to reduce the space occupied by the security inspection device. The first X-ray accelerator is provided at a position offset from the centerline of the inspection channel, so that a larger scanning area may be covered with a certain beam divergence angle of the first X-ray, which is beneficial for reducing the height of the security inspection device. The first X-ray and the second X-ray accelerated radiated by the first X-ray accelerator and the second X-ray accelerator share a part of the detector modules for reception. The required number of detector modules is small, so that signal acquisition and control of security inspection device are more convenient and it is conducive to enhancing the cost-effectiveness of security inspection device.

The exemplary embodiment of the present disclosure further discloses a security inspection method. The first X-ray accelerator and the second X-ray accelerator sequentially emit X-rays at intervals, and thus the detector module may mark the first X-ray and the second X-ray, so that different X-rays received by the detector module may be used to generate corresponding transmission images.

The exemplary embodiment of the present disclosure further discloses a security inspection system. A speed detection device is provided on an upstream of the security inspection device. A time for the first X-ray accelerator and a time for the second X-ray accelerator to emit beam are controlled based on the measured speed of the vehicle, so as to radiate X-rays after the cab of the vehicle passing through the security inspection device, thereby improving the safety of the inspection process.

### BRIEF DESCRIPTION OF THE DRAWINGS

FIG. 1 is a principle diagram of a security inspection device according to an exemplary embodiment of the present disclosure;
FIG. 2 is a schematic diagram of the security inspection device in the exemplary embodiment shown in FIG. 1 from left side perspective;
FIG. 3 is a flowchart of a security inspection method according to an exemplary embodiment of the present disclosure;
FIG. 4 is a schematic diagram of a pulse signal of X-ray according to an exemplary embodiment of the present disclosure, wherein 4A represents a pulse signal output by a first X-ray accelerator, 4B represents a pulse signal output by a second X-ray accelerator, and 4C represents a pulse signal collected and marked by a signal acquisition module;
FIG. 5 is a transmission image formed by a first X-ray according to an exemplary embodiment of the present disclosure;
FIG. 6 is a transmission image formed by a second X-ray according to an exemplary embodiment of the present disclosure; and
FIG. 7 is a principle diagram of a security inspection system according to an exemplary embodiment of the present disclosure.

### Reference signs

1. First X-ray accelerator;
   11. First X-ray;
2. Second X-ray accelerator;
   21. Second X-ray;
3. Top array;
4. Side array;
5. Bottom array;
6. Support frame;
7. Object to be inspected;
   71. Vehicle;
8. Speed detection device;
   81. First detection apparatus; and
   82. Second detection apparatus.

### DETAILED DESCRIPTION OF EMBODIMENTS

In order to make the purposes, technical solutions, and advantages of the present disclosure clearer, the present disclosure is further explained in detail in the following combined with specific embodiments and referring to the accompanying drawings.

The terms used here are only intended to describe specific embodiments and are not intended to limit the present disclosure. The terms "include", "comprise", etc. used here indicate the existence of the features, steps, operations, and/or components, but do not exclude the existence or addition of one or more other features, steps, operations, or components.

All terms used here, including technical and scientific terms, have the meanings commonly understood by those skilled in the art, unless otherwise defined. It should be noted that the terms used here should be interpreted as having a meaning consistent with the context of this specification, and should not be interpreted in an idealized or overly rigid manner.

In the case of using expressions such as "at least one of A, B, and C", it should generally be explained according to the meaning that those skilled in the art usually understand. For example, "a system with at least one of A, B, and C" should include but not be limited to systems with A only, B only, C only, A and B, A and C, B and C, and/or A, B and C, etc. In the case of using expressions such as "at least one of A, B, or C", it should generally be explained according to the meaning that those skilled in the art usually understand. For example, "a system with at least one of A, B, or C" should include but not be limited to systems with A only, B only, C only, A and B, A and C, B and C, and/or A, B and C, etc.

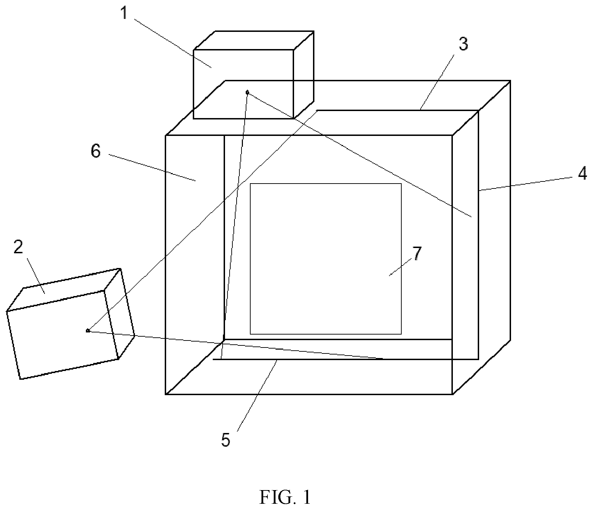

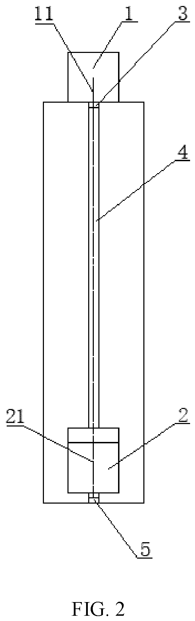

FIG. 1 is a principle diagram of a security inspection device according to an exemplary embodiment of the present disclosure. FIG. 2 is a schematic diagram of the security inspection device in the exemplary embodiment shown in FIG. 1 from left side perspective.

The present disclosure provides a security inspection device, as shown in FIGS. 1 and 2, including a support frame 6, a first X-ray accelerator 1, a second X-ray accelerator 2, and a detector apparatus.

The support frame 6 defines an inspection channel extending in a first direction.

The first X-ray accelerator 1 is provided at a position of a top portion of the support frame 6 and the position is offset from a centerline of the inspection channel, and the first X-ray accelerator 1 is configured to radiate a first X-ray 11 downwards towards the inspection channel to inspect an object to be inspected 7 passing through the inspection channel.

The second X-ray accelerator 2 is configured to radiate a second X-ray 21 towards the inspection channel to inspect the object to be inspected 7 passing through the inspection channel.

The detector apparatus includes but is not limited to a plurality of detector modules provided on the support frame 6 and facing the first X-ray accelerator 1 and the second X-ray accelerator 2, and the plurality of detector modules are configured to receive at least a part of the first X-ray and/or the second X-ray to form a transmission image of the object to be inspected 7. The first X-ray, the second X-ray, and a central plane formed by the plurality of detector modules are constructed to be located in the same plane. In this way, the first X-ray accelerator 1, the second X-ray accelerator 2, and the plurality of detector modules are all provided in the same support frame 6, which may at least save space occupied by one support frame 6. Moreover, the first X-ray accelerator 1 is provided at a position of the top portion of the support frame offset from the centerline of the inspection channel, so that a larger radiation area may be covered under the condition that the beam divergence angle of the first X-ray 11 is constant and the height of the first X-ray accelerator 1 is the same. More detector modules may be covered for the same height. In addition, since the first X-ray 11, the second X-ray 21, and the detector modules are constructed to be located in the same plane, at least a part of the detector modules may be shared. Therefore, compared to using structures such as two sets of support frames to arrange the first X-ray accelerator and corresponding detector apparatus, as well as the second X-ray accelerator and corresponding detector apparatus, respectively, the security inspection device of the present disclosure may reduce the number of detector modules, so as to achieve the purpose of easy control and cost savings.

In an exemplary embodiment, as shown in FIG. 1, the support frame 6 includes but is not limited to a door-shaped frame. The door-shaped frame includes two parallel side surfaces spaced apart and a top surface provided on the two side surfaces, with the bottom of the two side surfaces provided on a working surface. The entrance and exit of the inspection channel are opposite to each other and provided between the two surfaces of the door-shaped frame in the first direction.

Specifically, the working surface includes but is not limited to the ground. The working surface may further include any one of a bottom plate (protruding from the ground) or a groove (recess towards the ground), opposite to the top surface.

In an exemplary embodiment, the support frame 6 includes: two parallel side plates spaced apart on the working surface, a top plate between the upper portions of the two side plates, and a groove formed between the lower portions of the two side plates. A region enclosed by the top plate, the groove, and the two side plates defines the inspection channel. The inspection channel extends in the horizontal direction (i.e. the first direction). The inspection channel includes an inlet for the entry of the object to be inspected 7 into the inspection channel and an outlet for the exit of the object to be inspected 7 from the inspection channel. The inlet and the outlet are provided opposite to each other.

In an exemplary embodiment, the first X-ray accelerator 1 is offset from the centerline of the inspection channel by a distance including but not limited to 1500 mm to 4000 mm.

Specifically, the first X-ray accelerator 1 is offset from the centerline of the inspection channel by 3105 mm. It should be understood that the embodiments of the present disclosure are not limited to this.

For example, the first X-ray accelerator 1 is offset from the centerline of the inspection channel by a distance such as 3600 mm, 2600 mm, 2100 mm, 1600 mm, or other distances in the above range.

In contrast, in another exemplary embodiment, the first X-ray accelerator 1 is offset from the centerline of the inspection channel by a distance greater than 4000 mm or less than 1500 mm.

In an exemplary embodiment, the first X-ray accelerator 1 radiates the first X-ray to the support frame 6 at an angle tilted from the vertical direction. Tilting from the vertical direction represents that the centerline of a fan-shaped beam formed by the first X-ray is not perpendicular to the working surface (such as the ground).

In an exemplary embodiment, as shown in FIG. 2, the central plane formed by the detector modules represents that the centerlines of the receiving ends of detector modules in an array formed by the plurality of detector modules in rows and columns are located in the same plane, so that the first X-ray 11 and the second X-ray 21 may be received by the detector modules.

In an exemplary embodiment, the first X-ray accelerator 1 and/or the second X-ray accelerator 2 are provided on the support frame 6.

Specifically, the first X-ray accelerator 1 is provided on the top plate.

Furthermore, the second X-ray accelerator 2 is provided on the side plate. It should be understood that the embodiments of the present disclosure are not limited to this.

For example, on the premise of ensuring the radiation of the first X-ray 11 and the second X-ray 21 to the detector module, the first X-ray accelerator 1 and/or the second X-ray accelerator 2 may also be provided inside and/or outside the support frame 6.

In an exemplary embodiment, the first X-ray 11 and the second X-ray 21 radiating outward from the radiation source form fan-shaped beams. It is desired that the beam divergence angle of the X-ray formed by the fan-shaped beam may make the X-ray cover appropriate detector modules.

Specifically, the fan-shaped regions formed by the first X-ray 11 and the second X-ray 21 partially overlap.

In an exemplary embodiment, the beam divergence angle of the first X-ray 11 includes but is not limited to 60° to 80°. Taking the object to be inspected 7 as a vehicle 71 as an example, a main beam of the first X-ray 11 covers a region (such as cargos) of the vehicle 71 above a chassis, so that the X-rays above the main beam are not obstructed by the chassis.

Specifically, the beam divergence angle of the first X-ray is 60°. It should be understood that the embodiments of the present disclosure are not limited to this.

For example, the beam divergence angle of the first X-ray is 65°, 70°, 75°, or any other angles in the above range.

In an exemplary embodiment, the beam divergence angle of the second X-ray 21 includes but is not limited to 50° to 70°. In exemplary embodiment, both a radiation direction of the first X-ray 11 and a radiation direction of the second X-ray 21 are perpendicular to the first direction defined by the inspection channel.

Specifically, the inspection channel extends in a horizontal direction, while the first X-ray and the second X-ray radiate in a vertical direction. It should be understood that the embodiments of the present disclosure are not limited to this.

For example, the inspection channel extends in the vertical direction, while the first X-ray and the second X-ray radiate in the horizontal direction.

For example, the detection channel is divided into a detection region and a non-detection region. The object to be inspected 7 is inspected within the detection region. A movement direction of the object to be inspected 7 within the detection region should be defined as the first direction. The first X-ray and the second X-ray are substantially perpendicular to the first direction.

According to an embodiment of the present disclosure, the detector apparatus further includes a signal acquisition module. The signal acquisition module is electrically connected to the first X-ray accelerator 1, the second X-ray accelerator 2, and the plurality of detector modules, and the signal acquisition module is configured to mark signals generated by the first X-ray and the second X-ray and received by the detector module.

According to an embodiment of the present disclosure, the plurality of detector modules are tiled and constructed into a row, a column, or an array; wherein the tiling represents that receiving ends of detector modules in each row, column, or array are located in the same plane, which is conducive to the arrangement and connection of detector modules.

In an exemplary embodiment, the plurality of detectors are constructed into arrays, including but not limited to three arrays. The first array, the second array, and the third array are respectively provided on three end surfaces of the support frame 6. The first array is provided on the top surface, the second array is provided on the side surface, and the third array is provided on the bottom surface. The first array is parallel to the third array, and the first array and the third array are perpendicular to the second array.

According to an embodiment of present disclosure, a part of the plurality of detector modules are respectively constructed as a side array 4 and a bottom array 5; wherein the side array 4 is provided on an inner side surface of the support frame 6, the bottom array is provided on an inner bottom surface of the support frame 6, and a beam divergence angle of the first X-ray 11 covers the side array 4 and the bottom array 5.

In an exemplary embodiment, the side array 4 includes but is not limited to a detector module group formed by the plurality of detector modules arranged in a column in a vertical direction.

In an exemplary embodiment, the bottom array 5 includes but is not limited to a detector module group formed by the plurality of detector modules arranged in a row in a horizontal direction.

According to an embodiment of the present disclosure, the other part of the plurality of detector modules are constructed as a top array 3; wherein the top array 3 is provided on an inner top surface of the support frame 6, and a beam divergence angle of the second X-ray covers the side array 4 and the top array 3.

In an exemplary embodiment, the top array 3 includes but is not limited to a detector module group formed by the plurality of detector modules arranged in a row in the horizontal direction.

According to an embodiment of the present disclosure, the beam divergence angle of the second X-ray further covers a part of the bottom array 5.

In an exemplary embodiment, the second X-ray accelerator 2 is provided on a side portion of the support frame 6 without a detector module, and the second X-ray accelerator 2 is located on a side to which the first X-ray accelerator 1 offset from the centerline belongs.

For example, in a case where the first X-ray accelerator 1 is provided at a position of the top portion of the support frame 6 on the left side of the centerline, the second X-ray accelerator 2 is provided at a lower position of a left side portion of the support frame 6, as shown in FIG. 1. For example, in a case where the first X-ray accelerator 1 is provided at a position of the top portion of the support frame 6 on the right side of the centerline, the second X-ray accelerator 2 is provided at a lower position of a right side portion of the support frame 6.

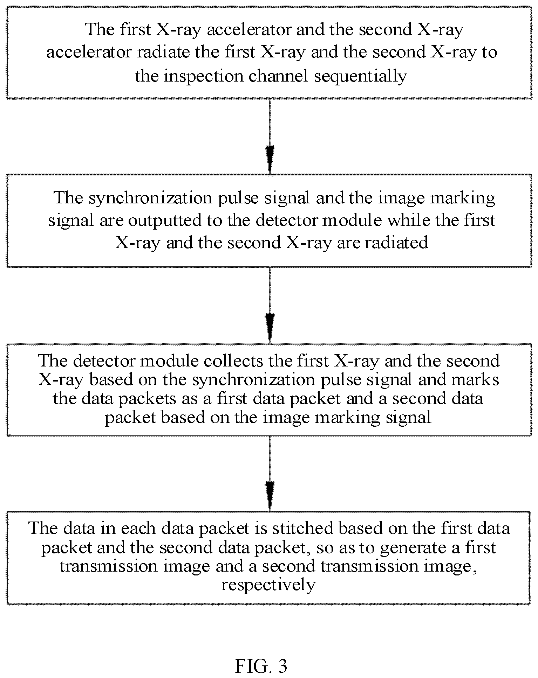

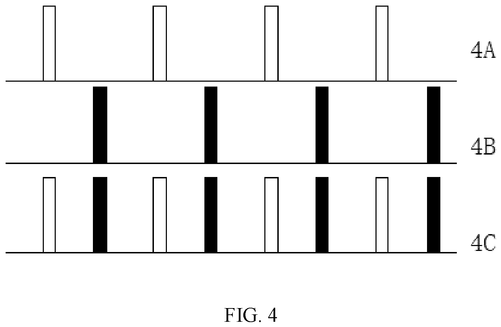

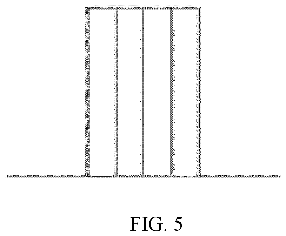

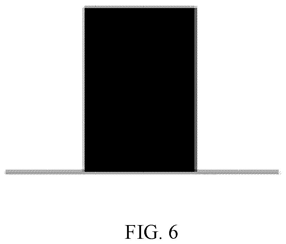

FIG. 3 is a flowchart of a security inspection method according to an exemplary embodiment of the present disclosure. FIG. 4 is a schematic diagram of a pulse signal of X-ray according to an exemplary embodiment of the present disclosure, wherein 4A represents a pulse signal output by a first X-ray accelerator, 4B represents a pulse signal output by a second X-ray accelerator, and 4C represents a pulse signal collected and marked by a signal acquisition module. FIG. 5 is a transmission image formed by a first X-ray according to an exemplary embodiment of the present disclosure. FIG. 6 is a transmission image formed by a second X-ray according to an exemplary embodiment of the present disclosure.

Another aspect of the present disclosure further provides a security inspection method, as shown in FIGS. 3 to 6, including: sequentially radiating the first X-ray 11 and the second X-ray 21 to the inspection channel at an interval, respectively, by the first X-ray accelerator 1 and the second X-ray accelerator 2; and collecting the first X-ray 11 and the second X-ray 21 and generating data packets respectively, by the detector module.

In an exemplary embodiment, the first X-ray accelerator 1 and the second X-ray accelerator 2 radiate the first X-ray 11 (including a ray beam) and the second X-ray 21 (including a ray beam) at predetermined frequencies and temporal intervals, respectively.

According to an embodiment of the present disclosure, as shown in FIG. 4, collecting the first X-ray 11 and the second X-ray 21 and generating data packets respectively, by the detector module includes: outputting a synchronization pulse signal and/or an image marking signal to the detector module, by the first X-ray accelerator 1 and the second X-ray accelerator 2, while radiating the first X-ray 11 and the second X-ray 21 to the inspection channel; collecting the first X-ray 11 and the second X-ray 21 based on the synchronization pulse signal and marking the collected data packets as a first data packet and a second data packet based on the image marking signal, by the detector module.

In an exemplary embodiment, the synchronization pulse signal and the image marking signal output from the first X-ray accelerator 1 (such as 4A) and the second X-ray accelerator 2 (such as 4B) and/or to the detector module are output to the signal acquisition module. The signal acquisition module collects the pulse signal (such as 4A) from the first X-ray accelerator 1 and the pulse signal (such as 4B) from the second X-ray accelerator 2 according to the synchronization pulse signal, and marks the collected data packets with marks of the corresponding X-ray accelerators, so as to form an acquisition signal (such as 4C) marked with the sources of accelerator pulses.

According to an embodiment of the present disclosure, as shown in FIGS. 5 and 6, the security inspection method further includes: stitching data in each data packet based on the first data packet and the second data packet, so as to generate a first transmission image (FIG. 5) and a second transmission image (FIG. 6), respectively.

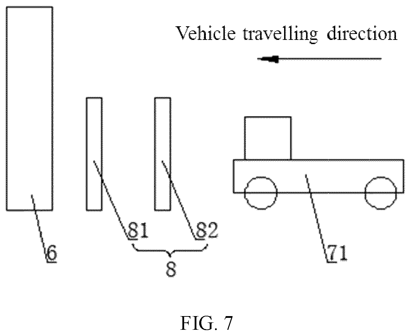

FIG. 7 is a principle diagram of a security inspection system according to an exemplary embodiment of the present disclosure.

Another aspect of the present disclosure further provides a security inspection system, applied to detect a moving vehicle 71. As shown in FIG. 7, the security inspection system includes a security inspection device and a speed detection device 8 configured to detect a speed of the vehicle 71. The speed detection device 8 includes a first detection apparatus 81 and a second detection apparatus 82 on an upstream of the security inspection device, and the second detection apparatus 82 is spaced apart from the first detection apparatus 81. The first detection apparatus 81 and the second detection apparatus 82 are configured to: obtain a contour of the vehicle when the vehicle 71 passes through the second detection apparatus 82, detect when a carriage of the vehicle leaves the second detection apparatus 82, measure the speed of the vehicle 71 by dividing a distance between the first detection apparatus 81 and the second detection apparatus 82 by a time interval between the vehicle passing through the first detection apparatus 81 and the second detection apparatus 82, determine a size of a cab of the vehicle using the measured speed of the vehicle 71, determine a position of the cab of the moving vehicle 71 in the inspection channel, and determine a beam emitting time of the first X-ray accelerator 1 and a beam emitting time of the second X-ray accelerator 2, so that the first X-ray accelerator 1 and the second X-ray accelerator 2 emit beams sequentially after the cab passing through the security inspection device.

In an exemplary embodiment, the speed detection device 8 includes a first detection apparatus 81 and a second detection apparatus 82. The second detection apparatus 82 is located on an upstream of the security inspection device and configured to: obtain a contour of the vehicle when the vehicle passes through the second detection apparatus 82, detect when a carriage of the vehicle leaves the second detection apparatus 82, measure the speed of the vehicle by dividing a distance between the first detection apparatus 81 and the second detection apparatus 82 by a time interval between the vehicle passing through the first detection apparatus 81 and the second detection apparatus 82, determine a size of a cab of the vehicle using the measured speed of the vehicle, determine a position of the cab of the moving vehicle in the inspection channel, and determine a beam emitting time of the first X-ray accelerator and a beam emitting time of the second X-ray accelerator, so that beams are emitted separately after the cab passing through the first X-ray accelerator and the second X-ray accelerator.

In this embodiment, obtaining the contour of the vehicle through the second detection apparatus 82 includes detecting a vehicle head of the vehicle and finding a boundary between the cab of the vehicle and the carriage.

Specifically, the second detection apparatus 82 is provided on the upstream of the first detection apparatus 81 (relative to a travel direction of the vehicle), the first detection apparatus 81 is located on the upstream of the first X-ray accelerator and the second X-ray accelerator, and the second detection apparatus 82 is configured to obtain the size of the contour of the vehicle when the vehicle passes through the second detection apparatus 82, including detecting the vehicle head and the boundary between the cab of the vehicle and the carriage, and detect when the carriage of the vehicle leaves the second detection apparatus 82. The speed of the vehicle is measured using the first detection apparatus 81 and the second detection apparatus 82, that is, the speed of the vehicle is measured by dividing the distance between the first detection apparatus 81 and the second detection apparatus 82 by the time interval between the vehicle passing through the first detection apparatus 81 and the second detection apparatus 82, so as to obtain lengths of the cab and the carriage.

Furthermore, the second detection apparatus 82 emits light perpendicular to the inspection channel. When the vehicle reaches the second detection apparatus 82, the light emitted by the second detection apparatus 82 is reflected by the vehicle. Upon receiving the light reflected by the vehicle, the second detection apparatus 82 may determine that the vehicle has passed. The vehicle continues to move forward, and a light curtain emitted by the first detection apparatus 81 illuminates the advancing vehicle, so as to detect the arrival of the vehicle head. The speed of the vehicle is calculated according to the distance between the first detection apparatus 81 and the second detection apparatus 82, as well as the time interval recorded by the security inspection device for the vehicle head to reach the second detection apparatus 82 and the first detection apparatus 81. Here, the second detection apparatus 82 may include a photosensor, which detects the arrival of the vehicle when the vehicle passes through the second detection apparatus 82. The second detection apparatus 82 does not need to have a speed measurement function, and even does not need to scan along the direction perpendicular to inspection channel to form a light curtain. The second detection apparatus 82 may only emit a light beam that crosses the inspection channel. When the vehicle head is illuminated by the light beam of the second detection apparatus 82, the second detection apparatus 82 may determine the arrival of the vehicle head. A detector may also be provided on the opposite side of the inspection channel to detect the light beam. When the vehicle blocks the light beam, it is determined that the vehicle is arrived. In this embodiment, the second detection apparatus 82 and the first detection apparatus 81 jointly complete the speed measurement of the vehicle.

Moreover, based on the distance between the second detection apparatus 82 and the support frame, after calculating the speed of the vehicle and determining the time it takes for the vehicle head to reach the second detection apparatus 82, the position of the vehicle may be determined by timing: after a predetermined time T1 after the vehicle head passes through the second detection apparatus 82, the cab of the vehicle leaves the first X-ray accelerator and the second X-ray accelerator (support frame 6). At this time, the first X-ray accelerator and the second X-ray accelerator are allowed to emit beams in sequence.

Those skilled in the art may understand that the features recorded in the various embodiments and/or claims of the present disclosure may be associated and/or combined in various ways, even if such associations or combinations are not explicitly recorded in the present disclosure. Specifically, without departing from the spirit and teachings of the present disclosure, the features recorded in the various embodiments and/or claims of the present disclosure may be associated and/or combined in various ways. All these associations and/or combinations fall within the scope of the present disclosure.

The embodiments of the present disclosure are described above. However, these embodiments are for illustrative purposes only and are not intended to limit the scope of the present disclosure. Although various embodiments have been described separately above, this does not mean that the measures in the various embodiments may not be advantageously combined. The scope of the present disclosure is limited by the attached claims and their equivalents. Without departing from the scope of the present disclosure, those skilled in the art may make various substitutions and modifications, all of which should fall within the scope of the present disclosure.

## Claims

1. A security inspection device, comprising:
a support frame (6), defining an inspection channel extending in a first direction;
a first X-ray accelerator (1) provided at a position of a top portion of the support frame (6) and the position is offset from a centerline of the inspection channel, wherein the first X-ray accelerator is configured to radiate a first X-ray downwards towards the inspection channel to inspect an object to be inspected (7) passing through the inspection channel;
a second X-ray accelerator (2) configured to radiate a second X-ray to the inspection channel to inspect the object to be inspected (7) passing through the inspection channel; and
a detector apparatus, comprising:
a plurality of detector modules provided on the support frame (6) and facing the first X-ray accelerator (1) and the second X-ray accelerator (2), wherein the plurality of detector modules are configured to receive at least a part of the first X-ray and/or the second X-ray to form a transmission image of the object to be inspected (7);
wherein the first X-ray (11), the second X-ray (21), and a central plane formed by the plurality of detector modules are constructed to be located in the same plane.

2. The security inspection device according to claim 1, wherein the detector apparatus further comprises a signal acquisition module, the signal acquisition module is electrically connected to the first X-ray accelerator (1), the second X-ray accelerator (2), and the plurality of detector modules, and the signal acquisition module is configured to mark signals generated by the first X-ray (11) and the second X-ray (21) and received by the detector module.

3. The security inspection device according to claim 1, wherein the plurality of detector modules are tiled and constructed into a row, a column, or an array;
wherein tiling the plurality of detector modules represents that receiving ends of detector modules in each row, column, or array are located in the same plane.

4. The security inspection device according to any one of claims 1 to 3, wherein a part of the plurality of detector modules are respectively constructed as a side array (4) and a bottom array (5);
wherein the side array (4) is provided on an inner side surface of the support frame (6), the bottom array (5) is provided on an inner bottom surface of the support frame (6), and a beam divergence angle of the first X-ray (11) covers the side array (4) and the bottom array (5).

5. The security inspection device according to claim 4, wherein the other part of the plurality of detector modules are constructed as a top array (3);
wherein the top array (3) is provided on an inner top surface of the support frame (6), and a beam divergence angle of the second X-ray covers the side array (4) and the top array (3).

6. The security inspection device according to claim 5, wherein the beam divergence angle of the second X-ray (21) further covers a part of the bottom array (5).

7. A security inspection method, applied to the security inspection device of any one of claims 1 to 6, comprising:
sequentially radiating the first X-ray (11) and the second X-ray (21) to the inspection channel at an interval, respectively, by the first X-ray accelerator (1) and the second X-ray accelerator (2); and
collecting the first X-ray (11) and the second X-ray (21) and generating data packets respectively, by the detector module.

8. The security inspection method according to claim 7, wherein the collecting the first X-ray (11) and the second X-ray (21) and generating data packets respectively, by the detector module comprises:
outputting a synchronization pulse signal and/or an image marking signal to the detector module, by the first X-ray accelerator (1) and the second X-ray accelerator (2), while radiating the first X-ray (11) and the second X-ray (21) to the inspection channel;
collecting the first X-ray (11) and the second X-ray (21) based on the synchronization pulse signal and marking the collected data packets as a first data packet and a second data packet based on the image marking signal, by the detector module.

9. The security inspection method according to claim 8, further comprising:
stitching data in each data packet based on the first data packet and the second data packet, so as to generate a first transmission image and a second transmission image, respectively.

10. A security inspection system, applied to detect a moving vehicle, comprising:
the security inspection device of any one of claims 1 to 6; and
a speed detection device (8) configured to detect a speed of the vehicle (71), wherein the speed detection device (8) comprises:
a first detection apparatus (81) on an upstream of the security inspection device; and
a second detection apparatus (82) on the upstream of the security inspection device and is spaced apart from the first detection apparatus (81);
wherein the first detection apparatus (81) and the second detection apparatus (82) are configured to: obtain a contour of the vehicle when the vehicle passes through the second detection apparatus (82), detect when a carriage of the vehicle leaves the second detection apparatus (82), measure the speed of the vehicle by dividing a distance between the second detection apparatus (82) and the first detection apparatus (81) by a time interval between the vehicle passing through the second detection apparatus (82) and the first detection apparatus (81), determine a size of a cab of the vehicle using the measured speed of the vehicle, determine a position of the cab of the moving vehicle in the inspection channel, and determine a time for the first X-ray accelerator (1) to emit beam and a time for the second X-ray accelerator (2) to emit beam, so that beams are emitted separately after the cab passing through the first X-ray accelerator (1) and the second X-ray accelerator (2).
